# EUROPÄISCHE PATENTSCHRIFT

(11) **EP 2 265 398 B1**
(45) Veröffentlichungstag und Bekanntmachung des Hinweises auf die Patenterteilung: **26.12.2012**
(21) Anmeldenummer: 09730404.2
(22) Anmeldetag: 07.04.2009
(51) Int. Cl.: B22D 19/00, B22D 19/08, B22F 3/26, C04B 35/52, C04B 41/51

(54) **CARBONKÖRPER IMPRÄGNIERT MIT EINER LEICHTMETALL-LEGIERUNG**
CARBON BODY IMPREGNATED WITH A LIGHT ALLOY
CORPS DE CARBONE IMPRÉGNÉ D'UN ALLIAGE DE MÉTAL LÉGER

(30) Priorität: 07.04.2008 DE 102008017756
(43) Veröffentlichungstag der Anmeldung: 29.12.2010
(73) Patentinhaber: SGL Carbon SE, 65201 Wiesbaden (DE); Carmag Gmbh, 06847 Dessau (DE)
(72) Erfinder: BECKER, Hans-Helmut, 34582 Borken (DE); HERNIG, Andreas, 06846 Dessau (DE); LAUKÖTTER, Karl-Heinz, 06847 Dessau (DE); THIELE, Walter, 53173 Bonn (DE)
(86) Internationale Anmeldenummer: PCT/EP2009/002552
(87) Internationale Veröffentlichungsnummer: WO 2009/124713

(56) Entgegenhaltungen:
- EP-A- 1 055 650
- DE-A1- 2 165 111
- DE-A1- 4 318 193
- ETTER T ET AL: "Physical properties of graphite/aluminium composites produced by gas pressure infiltration method" CARBON, ELSEVIER, OXFORD, GB, Bd. 41, Nr. 5, 1. Januar 2003 (2003-01-01), Seiten 1017-1024, XP004419900 ISSN: 0008-6223
- RODRIGUEZ-GUERRERO A ET AL: "Pressure infiltration of Al-12wt.% Si-X (X=Cu, Ti, Mg) alloys into graphite particle preforms" ACTA MATERIALIA, ELSEVIER, OXFORD, GB, Bd. 54, Nr. 7, 1. April 2006 (2006-04-01), Seiten 1821-1831, XP025027263 ISSN: 1359-6454 [gefunden am 2006-04-01]
- HUFNAGEL W.: "Key to Aluminium Alloys 4th Edition" 1991, ALUMINIUM-VERLAG GMBH , DÜSSELDORF , XP002538676 Seite 56 - Seite 64

## Beschreibung

Die Erfindung betrifft einen mit einer Leichtmetall-Legierung imprägnierten Carbonkörper. Solche Körper werden auch als Kohlenstoff-Leichtmetall-Komposite bezeichnet. Die Erfindung betrifft weiterhin ein Verfahren zur Herstellung eines solchen Carbonkörpers und seine Verwendung als Maschinenbauteil, insbesondere als Kolben in Verbrennungsmotoren.

Aus dem Dokument DE 2165111 sind Kohlenstoff-Metall-Kompositgleitbauteile und Verfahren zu deren Herstellung bekannt. Danach werden aus pulverförmiger Kohle mit einem flüchtigen Materialgehalt von 10 bis 45 %, einem fixierten Kohlenstoffgehalt von 50 bis 85 %, einem Aschegehalt von 10 % oder weniger und einer Teilchengröße von 74 µm oder weniger und einer Imprägnierung eines Nicht-Eisenmetalles oder einer derartigen Legierung in den kohlenstoffhaltigen gesinterten Formkörpern erhalten. Als Nicht-Eisenmetall werden Aluminium-Legierungen erwähnt, die unter einem Überdruck von 50 kg/cm² (49,0 bar) in den nicht graphitierten, sondern nur bei 1400°C karbonisierten Kohlenstoff-Körper infiltriert werden. Es werden dabei nur maximal 98 % der Poren gefüllt.

Ein als Werkstoff für Kolben brauchbares Verbundmaterial mit einer Porosität im Bereich von höchstens 10 % ist aus dem Dokument DE 43 18 193 A1 bekannt. Dabei sind 60 bis 95 % einer isotropen Graphitmatrix mit einer Aluminiumlegierung durchtränkt. Die Infiltration der Aluminiumlegierung soll bei einem Druck von 110 Kg/cm² (108 bar) erfolgen.

In der Publikation von T. Etter et al., "Physical properties of graphite / aluminium composites produced by gas pressure infiltration method", Carbon 41 (2003) 1017-1024, werden weiterhin Graphit/Aluminium-Komposite beschrieben, bei denen kalt isostatisch gepresste, karbonisierte und graphitierte Graphitkörper mit einer Porosität zwischen 10 und 13% mit technisch reinem Aluminium oder einer Aluminiumlegierung mit einem Überdruck von ungefähr 8 bar infiltriert werden.

Die bekannten Kohlenstoff-Leichtmetall-Komposite sind für viele Anwendungen aufgrund ihrer nicht ausreichenden Druck- und Zugfestigkeit sowie ihrer unzureichenden Schlagzähigkeit nicht eingesetzt worden.

Die Erfindung hat sich die Aufgabe gestellt, Carbonkörper anzugeben, die mit einer Aluminiumlegierung imprägniert sind, die die Nachteile der bekannten Kohlenstoff-Leichtmetall-Komposite überwinden und die für die Herstellung von Maschinenbauteilen, insbesondere bewegten Maschinenbauteilen wie Kolben, geeignet sind. Die Erfindung betrifft auch ein Verfahren zur Herstellung von solchen Carbonkörpem.

Erfindungsgemäß wird die Aufgabe durch einen Carbonkörper gelöst, der 5 bis 30 Vol.%, vorzugsweise 15 bis 30 Vol.%, einer Aluminium-Legierung mit einem Gehalt von 5 bis 13,0 Masse% Silizium, 0,05 bis 5,0 Masse% Kupfer, 0,5 bis 3,5 Masse% Eisen, 0,25 bis 1,0 Masse% Mangan, 0,10 bis 1,5 Masse% Zink und 0,05 bis 0,35 Masse% Titan in einer Matrix aus Kohlenstoff- oder Graphitpartikeln mit einer mittleren Teilchengröße im Bereich von 3 bis 20 µm enthält und eine Dichte von 2,00 bis 2,4 g/cm³, eine Biegefestigkeit von 140 bis 180 MPa, eine Druckfestigkeit von 350 bis 450 MPa, eine Zugfestigkeit von 100 bis 115 MPa, eine Schlagzähigkeit von 3,5 bis 6,2 kJ/m² sowie eine Wärmeleitfähigkeit von 70 bis 100 W/mK, vorzugsweise eine Wärmeleitfähigkeit von 80 bis 90 W/mK bei Raumtemperatur, aufweist.
Überraschenderweise hat sich gezeigt, dass diese Eigenschaften nur erzielt werden, wenn ein entsprechend ausgewählter Carbonkörper mit einer Aluminium-Legierung der angegebenen Zusammensetzung bis zu einem Porenfüllgrad > 90 % gefüllt ist.

Weitere vorteilhafte Ausgestaltungen der Erfindung sind in den Ansprüchen 2 und 3 dargelegt. Danach enthält der Carbonkörper eine Aluminium-Legierung mit bis zu 0,50 Masse% Magnesium, bis zu 0,20 Masse% Chrom, bis zu 0,70 Masse% Nickel, bis zu 0,50 Masse% Blei und bis zu 0,40 Masse% Zinn, besonders bevorzugt eine Aluminium-Legierung, die 7,0 bis 9,5 Masse% Silizium, 3,0 bis 3,5 Masse% Kupfer, 1,2 Masse% Eisen, 0,1 bis 0,5 Masse% Mangan, 1,2 Masse% Zink, 0,15 Masse% Titan, 0,10 bis 0,5 Masse% Magnesium, 0,20 Masse% Blei und 0,10 Masse% Zinn enthält.

Das erfindungsgemäße Verfahren zur Herstellung des Carbon-Leichmetall-Komposits erfolgt in der Weise, dass ein im Temperaturbereich von 1000° bis 2800°C karbonisierter und/oder graphitierter Carbonkörper, einer Imprägnierung mit einer Aluminium-Legierung unterzogen wird, wobei ein Kohlenstoff mit einer Dichte von 1,75 bis 1,80 g/cm³, einer Biegefestigkeit von 40 bis 60 MPa, einer Druckfestigkeit von 100 bis 130 MPa, einem Elastizitätsmodul von 9,0 x 10³ bis 12 x 10³ N/mm³, einer Wärmeleitfähigkeit von 70 bis 100 W/mK sowie einer offenen Porosität von 5 bis 30 Volumen%, vorzugsweise 15 bis 30 Vol.%, wobei mittlere Porengröße im Bereich von 1,5 ± 0,2 µm liegt, eingesetzt und mit einer Aluminium-Legierung mit einem Gehalt von 5 bis 13,0 Masse% Silizium, 0,05 bis 5,0 Masse% Kupfer, 0,5 bis 3,5 Masse% Eisen, 0,25 bis 1,0 Masse% Mangan, 0,10 bis 1,5 Masse% Zink und 0,05 bis 0,35 Masse% Titan und einem Schmelzbereich von 470 bis 650°C mit einem Überdruck von 1500 bis 4000 bar in Abhängigkeit von der benötigten Eindringtiefe für eine Porenfüllgrad > 90 % imprägniert wird. Als Ausgangsmaterial für die Herstellung des erfindungsgemäß eingesetzten Carbonkörpers werden Kokse, Mesophasen und ähnliche hochkondensierte Peche, Elektrographite oder Naturgraphite verwendet.

Eine weitere vorteilhafte Ausgestaltungen des erfindungsgemäßen Verfahrens ist im Anspruch 5 dargelegt. Dabei wird der Ausgangscarbonkörper besonders bevorzugt nur bei Temperaturen von 2200° bis 2500°C graphitiert. Es hat sich gezeigt, dass der Wirkungsgrad eines Verbrennungsmotors, der mit solchen Kolben ausgestattet ist, dadurch erhöht werden kann.

Das Carbon-Leichmetall-Komposit wird erfindungsgemäß für Maschinenbauteile, insbesondere für bewegte Maschinenbauteile, wie Kolben für Verbrennungsmotore, insbesondere für Otto-, Dieselmotore, Kompressoren, Druckgas oder Dampf getriebenen Kolbenmaschinen verwendet.

Dabei zeichnen sich die Kolben für Verbrennungsmotore durch die in den Ansprüchen 8 bis 13 dargelegten Ausgestaltungen aus. Insbesondere ist der Kolben zylindrisch geformt und besitzt 0 bis 3 Kolbenringe, d.h., in Kombination mit einer Zylinderlaufbuchse, gefertigt aus einem erfindungsgemäßen Material mit dem gleichen Wärmeausdehnungskoeffizienten, kann auf Kolbenringe vollständig verzichtet werden.

Vorteilhafterweise besitzt der Kolben einen abgesetzten Kolbendurchmesser, wobei er in Abhängigkeit von der thermischen Belastung oberhalb des Kompressionsringes in Richtung des Verbrennungsraumes einen kleineren Durchmesser als unterhalb des Kompressionsringes aufweist. Besonders bevorzugt ist ein Kolben, der in einem Verbrennungsmotor eingesetzt lediglich einen Kompressionsring und einen Ölabstreifring besitzt. Dabei sind die Kanten des Kolbens mit einen Radius von 0,4 bis 5 mm verrundet. Das Spaltmaß des Kolbens liegt vorzugweise im Bereich von 10 bis 30 µm. Der Kolbenring besteht aus einem Material, wie es vorstehend beschrieben wurde, besonders bevorzugt aus dem gleichen Material wie der eingesetzte Kolben.
Vorteilhafterweise wird das Material des Kolbenringes nach tribologischen Aspekten ausgewählt, wobei Kolbenring und Kolben unterschiedliche Härtegrade aufweisen.

Vorteilhafterweise besteht auch die in einen Motorblock eingeschrumpfte Zylinderlaufbuchse aus einem Material, wie es vorstehend beschrieben wurde. Der Einsatz des erfindungsgemäßen Materials als Kolben in Verbrennungsmotoren führt zu einer verbesserten Laufruhe, geringerer Schadstoffemission, geringerem Ölverbrauch und eine bessere Kraftstoffeffizienz. Dabei steigt das nutzbare Drehmoment, wodurch ein downsizing des Motors, d.h., die Herstellung eines kleineren und leichteren Motors mit gleicher Leistung ermöglicht wird. Die Gewichtsersparnis pro Kolben beträgt bis zu 40 %. Auf eine Ölkühlung des Kolbenbodens kann verzichtet werden. Die Verbrennungstemperatur im Zylinder ist erhöht und führt zu einer Temperaturerhöhung im Abgasstrang und damit zu einer besseren Verbrennung von Rußpartikeln. Die Wärmeleitfähigkeit des erfindungsgemäßen Kolbens sinkt umgekehrt proportional mit zunehmender Anwendungstemperatur, so dass Arbeitstemperaturen im Verbrennungsmotor oberhalb von 500° bis 600°C erzielt werden.

Die Erfindung wird näher und beispielhaft nachfolgend erläutert.

### Beispiel 1

Ein Carbonkörper wird durch isostatisches Pressen aus synthetischem Graphit mit einer Korngrößenverteilung von d₅₀ = 10 µm und einem Bindemittel und anschließendes Karbonisieren sowie Graphitieren im Temperaturbereich von 2200° bis 2800 °C unter nicht oxidierenden Bedingungen hergestellt. Die Imprägnierung mit der Leichtmetall-Legierung erfolgt durch Vorwärmen der Carbonrohlinge auf Werkzeugtemperatur zur Anpassung der thermischen Ausdehnungskoeffizienten und Einschießen der Legierung über den Anguß in die zu infiltrierenden Carbonkörper. Die Temperatur wird dabei so gewählt, dass sie der Schmelztemperatur der eingesetzten Legierung + 5°C entspricht. Der spezifische Innendruck in Form liegt bei > 1500 bar. Er wird nach den in der nachfolgenden Tabelle 1 angegebenen Größen festgelegt:

**Tabelle 1**

| Durchmesser [mm] / Höhe [mm] | Druck [bar] |
|---|---|
| 100 x 100 | < 2000 |
| 200 x 200 | > 2000 |
| 300 x 300 | > 2300 |
| 400 x 400 | > 3000 |

Die Haltezeit ist hauptsächlich abhängig von den Materialeigenschaften des eingesetzten Kohlenstoff wie Porosität und Porenform. Die Imprägnierung wird wegen möglicher Oxidationsreaktionen (Abbrand, Carbidbildung) unter Schutzgas vorgenommen, bis durch Abkühlung eine Erstarrung der Leichtmetall-Legierung in den Poren des Carbonkörpers erfolgt ist.

### Vergleichsbeispiele

In der Tabelle 2 sind die Ergebnisse von Vergleichsversuchen 1 bis 3 enthalten bei denen Probekörper mit 90 mm Durchmesser und 90 mm Höhe aus einem Carbonmaterial analog Beispiel 1 mit unterschiedlichen spezifischen Innendruck bei der Infiltration beaufschlagt wurden. Es wurde die Eindringtiefe und die Biegefestigkeit ermittelt.

**Tabelle 2**

| | spez. Innendruck [bar] | Eindringtiefe [mm] | Biegefestigkeit [MPa] |
|---|---|---|---|
| Vergleich 1 | 50 | 1-2 | 60 |
| Vergleich 2 | 100 | 4-5 | 65 |
| Vergleich 3 | 200 | 10-20 | 75 |
| Beispiel 2 | 380 | 45 | 150 |

### Beispiel 3

Ein Probekörper analog Beispiel 1 mit den Maßen 600 x 400 x 200 mm wurde mit einer Aluminiumlegierung gemäß Beispiel 1 infiltriert. Bei einem spezifischen Innendruck im Werkzeug von 100 bar wurde eine Eindringtiefe von 4-5 mm erzielt. Bei einem spezifischen Innendruck im Werkzeug von ≥ 1800 bar wird eine Eindringtiefe > 200 mm, d.h., eine im wesentlichen vollständige Imprägnierung erzielt.

Aus dem vorstehend beschriebenen Material wurden Kolben für einen internen Vierzylinder-Verbrennungsmotor gefertigt, der bei einem Hubraumvolumen von V=1990 ccm eine Nennleistung von 195PS entwickelt. Im Drehzahlbereich von 6000 Umdrehungen pro Minute wird eine Leistungs- und Drehmomentabgabesteigerung gegenüber dem mit Aluminiumkolben ausgestatteten Motor von 15 bis 20 % erzielt. Gleichzeitig wurden die in der nachfolgenden Tabelle 3 zusammengestellten Reduzierungen der Schadstoffemissionswerte ermittelt.

**Tabelle 3**

| Abgasbestandteile | Schadstoffgehalt mit Al-Kolben | Schadstoffgehalt mit Kolben gemäß Bsp. 3 | Veränderung in Prozent |
|---|---|---|---|
| CO | 0,4 - 0,8% | 0,1 - 0,4% | -25% |
| CO2 | 14,5 - 16% | 11,5 - 14,7% | -20% |
| 02 | 0,1 - 0,5% | 0,9 - 1,6% | |
| HC | 100ppm | 68ppm | -32% |

## Patentansprüche

1. Mit einer Leichtmetall-Legierung imprägnierter Carbonkörper, **dadurch gekennzeichnet, dass** er 5 bis 30 Vol.% einer Aluminium-Legierung mit einem Gehalt von 5 bis 13,0 Masse% Silizium, 0,05 bis 5,0 Masse% Kupfer, 0,5 bis 3,5 Masse% Eisen, 0,25 bis 1,0 Masse% Mangan, 0,10 bis 1,5 Masse% Zink und 0,05 bis 0,35 Masse% Titan in einer Matrix aus Kohlenstoff- oder Graphitpartikeln mit einer mittleren Teilchengröße im Bereich von 3 bis 20 µm enthält und eine Dichte von 2,00 bis 2,4 g/cm³, eine Biegefestigkeit von 140 bis 180 MPa, eine Druckfestigkeit von 350 bis 450 MPa, eine Zugfestigkeit von 100 bis 115 MPa , eine Schlagzähigkeit von 3,5 bis 6,2 kJ/m² sowie eine Wärmeleitfähigkeit von 70 bis 100 W/mK bei Raumtemperatur aufweist.

2. Carbonkörper nach Anspruch 1, **dadurch gekennzeichnet, dass** er eine Aluminium-Legierung mit bis zu 0,50 Masse% Magnesium, bis zu 0,20 Masse% Chrom, bis zu 0,70 Masse% Nickel, bis zu 0,50 Masse% Blei und bis zu 0,40 Masse% Zinn enthält.

3. Carbonkörper nach Anspruch 1 oder 2, **dadurch gekennzeichnet, dass** er eine Aluminium-Legierung mit einem Gehalt von 7,0 bis 9,5 Masse% Silizium, 3,0 bis 3,5 Masse% Kupfer, 1,2 Masse% Eisen, 0,1 bis 0,5 Masse% Mangan, 1,2 Masse% Zink, 0,15 Masse% Titan, 0,10 bis 0,5 Masse% Magnesium, 0,20 Masse% Blei und 0,10 Masse% Zinn enthält.

4. Verfahren zur Herstellung eines Carbonkörpers nach Anspruch 1 bis 3, **dadurch gekennzeichnet, dass** ein im Temperaturbereich von 1000° bis 2800 °C karbonisierter und/oder graphitierter Carbonkörper, einer Imprägnierung mit einer Aluminium-Legierung unterzogen wird, wobei ein Kohlenstoff mit einer Dichte von 1,75 bis 1,80 g/cm³, einer Biegefestigkeit von 40 bis 60 MPa, einer Druckfestigkeit von 100 bis 130 MPa, einem Elastizitätsmodul von 9,0 x 10³ bis 12 x 10³ N/mm³, einer Wärmeleitfähigkeit von 70 bis 100 W/mK bei Raumtemperatur sowie einer offenen Porosität von 5 bis 30 Volumen%, wobei mittlere Porengröße im Bereich von 1,5 ± 0,2 µm liegt, eingesetzt und mit einer Aluminium-Legierung mit einem Gehalt von 5 bis 13,0 Masse% Silizium, 0,05 bis 5,0 Masse% Kupfer, 0,5 bis 3,5 Masse% Eisen, 0,25 bis 1,0 Masse% Mangan, 0,10 bis 1,5 Masse% Zink und 0,05 bis 0,35 Masse% Titan und einem Schmelzbereich von 470 bis 650°C mit einem Überdruck von 1500 bis 4000 bar in Abhängigkeit von der benötigten Eindringtiefe für eine Porenfüllgrad > 90 % imprägniert wird.

5. Verfahren nach Anspruch 4, **dadurch gekennzeichnet, dass** eine Aluminium-Legierung mit einem Gehalt von 7,0 bis 9,5 Masse% Silizium, 3,0 bis 3,5 Masse% Kupfer, 1,2 Masse% Eisen, 0,1 bis 0,5 Masse% Mangan, 1,2 Masse% Zink, 0,15 Masse% Titan, 0,10 bis 0,5 Masse% Magnesium, 0,20 Masse% Blei und 0,10 Masse% Zinn eingesetzt wird.

6. Verfahren nach Anspruch 4 oder 5, **dadurch gekennzeichnet, dass** ein isostatisch gepresster und im Temperaturbereich von 2200° bis 2500°C graphitierter Carbonkörper zur Imprägnierung eingesetzt wird.

7. Verwendung eines Carbonkörpers nach Anspruch 1 bis 3 als Werkstoff für Maschinenbauteile.

8. Verwendung nach Anspruch 7 als Kolben für Verbrennungsmotore, Kompressoren, Druckgas oder Dampf getriebenen Kolbenmaschinen.

9. Kolben nach Anspruch 8, **dadurch gekennzeichnet, dass** der Kolben zylindrisch geformt ist und 0 bis 3 Kolbenringe besitzt.

10. Kolben nach Anspruch 9, **dadurch gekennzeichnet, dass** der Kolben einen abgesetzten Kolbendurchmesser besitzt, wobei er in Abhängigkeit von der thermischen Belastung oberhalb des Kompressionsringes in Richtung des Verbrennungsraumes einen kleineren Durchmesser als unterhalb des Kompressionsringes aufweist.

11. Kolben nach Anspruch 9 oder 10, **dadurch gekennzeichnet, dass** der Verbrennungsmotorkolben lediglich einen Kompressionsring und einen Ölabstreifring besitzt.

12. Kolben nach Anspruch 8 bis 11, **dadurch gekennzeichnet, dass** die Kanten einen Radius von 0,4 bis 5 mm aufweisen.

13. Kolben nach Anspruch 8 bis 12, **dadurch gekennzeichnet, dass** das Spaltmaß im Bereich von 10 bis 30 µm liegt.

14. Kolbenring nach Anspruch 7, **dadurch gekennzeichnet, dass** er aus einem Material gemäß einem oder mehreren der Ansprüche 1 bis 3 besteht.

15. Kolbenring nach Anspruch 14, **dadurch gekennzeichnet, dass** er aus dem gleichen Material wie der Kolben besteht.

16. Kolbenring nach Anspruch 14, **dadurch gekennzeichnet, dass** er nach tribologischen Aspekten aus einem Material gemäß einem oder mehreren der Ansprüche 1 bis 3 ausgewählt ist, wobei Kolbenring und Kolben unterschiedliche Härtegrade aufweisen.

17. Zylinderlaufbuchse eingeschrumpft in einen Motorblock nach Anspruch 7, **dadurch gekennzeichnet, dass** sie aus einem Material gemäß einem oder mehreren der Ansprüche 1 bis 3 besteht.

## Claims

1. Carbon body impregnated with a light metal alloy, **characterized in that** it comprises 5 to 30% by volume of an aluminium alloy with a content of 5 to 13.0% by mass silicon, 0.05 to 5.0% by mass copper, 0.5 to 3.5% by mass iron, 0.25 to 1.0% by mass manganese, 0.10 to 1.5% by mass zinc and 0.05 to 0.35% by mass titanium in a matrix of carbon or graphite particles having a mean particle size in the range of 3 to 20 µm, and has a density of 2.00 to 2.4 g/cm³, a flexural strength of 140 to 180 MPa, a compressive strength of 350 to 450 MPa, a tensile strength of 100 to 115 MPa, an impact strength of 3.5 to 6.2 kJ/m² and a thermal conductivity of 70 to 100 W/mK at room temperature.

2. Carbon body according to Claim 1, **characterized in that** it comprises an aluminium alloy containing up to 0.50% by mass magnesium, up to 0.20% by mass chromium, up to 0.70% by mass nickel, up to 0.50% by mass lead and up to 0.40% by mass tin.

3. Carbon body according to Claim 1 or 2, **characterized in that** it comprises an aluminium alloy with a content of 7.0 to 9.5% by mass silicon, 3.0 to 3.5% by mass copper, 1.2% by mass iron, 0.1 to 0.5% by mass manganese, 1.2% by mass zinc, 0.15% by mass titanium, 0.10 to 0.5% by mass magnesium, 0.20% by mass lead and 0.10% by mass tin.

4. Process for producing a carbon body according to Claims 1 to 3, **characterized in that** a carbon body carbonized and/or graphitized in the temperature range of 1000° to 2800°C is subjected to impregnation with an aluminium alloy, wherein a carbon having a density of 1.75 to 1.80 g/cm³, a flexural strength of 40 to 60 MPa, a compressive strength of 100 to 130 MPa, a modulus of elasticity of 9.0 x 10³ to 12 x 10³ N/mm³, a thermal conductivity of 70 to 100 W/mK at room temperature and an open porosity of 5 to 30% by volume, the mean pore size lying in the range of 1.5 ± 0.2 µm, is used and is impregnated with an aluminium alloy with a content of 5 to 13.0% by mass silicon, 0.05 to 5.0% by mass copper, 0.5 to 3.5% by mass iron, 0.25 to 1.0% by mass manganese, 0.10 to 1.5% by mass zinc and 0.05 to 0.35% by mass titanium and a melting range of 470 to 650°C at an excess pressure of 1500 to 4000 bar depending on the required depth of penetration for a degree of pore filling > 90%.

5. Process according to Claim 4, **characterized in that** an aluminium alloy with a content of 7.0 to 9.5% by mass silicon, 3.0 to 3.5% by mass copper, 1.2% by mass iron, 0.1 to 0.5% by mass manganese, 1.2% by mass zinc, 0.15% by mass titanium, 0.10 to 0.5% by mass magnesium, 0.20% by mass lead and 0.10% by mass tin is used.

6. Process according to Claim 4 or 5, **characterized in that** an isostatically pressed carbon body graphitized in the temperature range of 2200° to 2500°C is used for the impregnation.

7. Use of a carbon body according to Claims 1 to 3 as a material for machine components.

8. Use according to Claim 7 as a piston for internal combustion engines, compressors, piston machines operated with compressed gas or steam.

9. Piston according to Claim 8, **characterized in that** the piston has a cylindrical shape and has 0 to 3 piston rings.

10. Piston according to Claim 9, **characterized in that** the piston has a graduated piston diameter, it having a smaller diameter above the compression ring in the direction of the combustion chamber than below the compression ring, depending on the thermal loading.

11. Piston according to Claim 9 or 10, **characterized in that** the internal combustion engine piston has merely a compression ring and an oil scraper ring.

12. Piston according to Claims 8 to 11, **characterized in that** the edges have a radius of 0.4 to 5 mm.

13. Piston according to Claims 8 to 12, **characterized in that** the clearance lies in the range of 10 to 30 µm.

14. Piston ring according to Claim 7, **characterized in that** it consists of a material according to one or more of Claims 1 to 3.

15. Piston ring according to Claim 14, **characterized in that** it consists of the same material as the piston.

16. Piston ring according to Claim 14, **characterized in that**, on the basis of tribological aspects, it is selected from a material according to one or more of Claims 1 to 3, the piston ring and the piston having differing degrees of hardness.

17. Cylinder liner shrunk into an engine block according to Claim 7, **characterized in that** it consists of a material according to one or more of Claims 1 to 3.

## Revendications

1. Corps de carbone imprégné d'un alliage de métal léger, **caractérisé en ce qu'**il contient 5 à 30 % en volume d'un alliage d'aluminium présentant une teneur de 5 à 13,0 % en masse de silicium, de 0,05 à 5,0 % en masse de cuivre, de 0,5 à 3,5 % en masse de fer, de 0,25 à 1,0 % en masse de manganèse, de 0,10 à 1,5 % en masse de zinc et de 0,05 à 0,35 % en masse de titane dans une matrice de particules de carbone ou de graphite présentant une taille moyenne de particules dans la plage de 3 à 20 µm, et présente une densité de 2,00 à 2,4 g/cm³, une résistance à la flexion de 140 à 180 MPa, une résistance à la compression de 350 à 450 MPa, une résistance à la traction de 100 à 115 MPa, une résilience de 3,5 à 6,2 kJ/m², ainsi qu'une conductibilité calorifique de 70 à 100 W/mK à la température ambiante.

2. Corps de carbone selon la revendication 1, **caractérisé en ce qu'**il contient un alliage d'aluminium contenant jusqu'à 0,50 % en masse de magnésium, jusqu'à 0,20 % en masse de chrome, jusqu'à 0,70 % en masse de nickel, jusqu'à 0,50 % en masse de plomb et jusqu'à 0,40 % en masse d'étain.

3. Corps de carbone selon la revendication 1 ou 2, **caractérisé en ce qu'**il contient un alliage d'aluminium présentant une teneur de 7,0 à 9,5 % en masse de silicium, de 3,0 à 3,5 % en masse de cuivre, de 1,2 % en masse de fer, de 0,1 à 0,5 % en masse de manganèse, de 1,2 % en masse de zinc, de 0,15 % en masse de titane, de 0,10 à 0,5 % en masse de magnésium, de 0,20 % en masse de plomb et de 0,10 % en masse d'étain.

4. Procédé de production d'un corps de carbone selon l'une des revendications 1 à 3, **caractérisé en ce que** l'on soumet un corps de carbone carbonisé et/ou graphité dans la plage de température de 1000° à 2800°C à une imprégnation avec un alliage d'aluminium, dans lequel on utilise un carbone présentant une densité de 1,75 à 1,80 g/cm³, une résistance à la flexion de 40 à 60 MPa, une résistance à la compression de 100 à 130 MPa, un module d'élasticité de 9,0x10³ à 12x10³ N/mm³, une conductibilité calorifique de 70 à 100 W/mK à la température ambiante ainsi qu'une porosité ouverte de 5 à 30 % en volume, la taille moyenne des pores se situant dans la plage de 1,5 ± 0,2 µm, et on l'imprègne avec un alliage d'aluminium présentant une teneur de 5 à 13,0 % en masse de silicium, de 0,05 à 5,0 % en masse de cuivre, de 0,5 à 3,5 % en masse de fer, de 0,25 à 1,0 % en masse de manganèse, de 0,10 à 1,5 % en masse de zinc et de 0,05 à 0,35 % en masse de titane et un domaine de fusion de 470 à 650°C avec une surpression de 1500 à 4000 bars en fonction de la profondeur de pénétration requise pour un degré de remplissage des pores > 90 %.

5. Procédé selon la revendication 4, **caractérisé en ce que** l'on utilise un alliage d'aluminium présentant une teneur de 7,0 à 9,5 % en masse de silicium, de 3,0 à 3,5 % en masse de cuivre, de 1,2 % en masse de fer, de 0,1 à 0,5 % en masse de manganèse, de 1,2 % en masse de zinc, de 0,15 % en masse de titane, de 0,10 à 0,5 % en masse de magnésium, de 0,20 % en masse de plomb et de 0,10 % en masse d'étain.

6. Procédé selon la revendication 4 ou 5, **caractérisé en ce que** l'on utilise pour l'imprégnation un corps de carbone compacté de façon isostatique et graphité dans la plage de température de 2200° à 2500°C.

7. Utilisation d'un corps de carbone selon une revendication 1 à 3 comme matériau pour des composants de machines.

8. Utilisation selon la revendication 7 comme piston pour des moteurs à combustion interne, des compresseurs, des machines à piston fonctionnant au gaz comprimé ou à la vapeur.

9. Piston selon la revendication 8, **caractérisé en ce que** le piston est de forme cylindrique et possède 0 à 3 segments de piston.

10. Piston selon la revendication 9, **caractérisé en ce que** le piston possède un diamètre de piston étagé, dans lequel il présente, en fonction de la charge thermique, un plus petit diamètre au-dessus du segment de compression en direction de la chambre de combustion qu'en dessous du segment de compression.

11. Piston selon la revendication 9 ou 10, **caractérisé en ce que** le piston de moteur à combustion interne possède uniquement un segment de compression et un segment de raclage d'huile.

12. Piston selon une des revendications 8 à 11, **caractérisé en ce que** les arêtes présentent un rayon de 0,4 à 5 mm.

13. Piston selon une des revendications 8 à 12, **caractérisé en ce que** la dimension de la fente se situe dans la plage de 10 à 30 µm.

14. Segment de piston selon la revendication 7, **caractérisé en ce qu'**il se compose d'un matériau selon une ou plusieurs des revendications 1 à 3.

15. Segment de piston selon la revendication 14, **caractérisé en ce qu'**il se compose du même matériau que le piston.

16. Segment de piston selon la revendication 14, **caractérisé en ce qu'**il est choisi, suivant des aspects tribologiques, parmi un matériau selon une ou plusieurs des revendications 1 à 3, le segment de piston et le piston présentant des niveaux de dureté différents.

17. Chemise de cylindre sertie dans un bloc moteur selon la revendication 7, **caractérisée en ce qu'**elle se compose d'un matériau selon une ou plusieurs des revendications 1 à 3.
